# EUROPÄISCHE PATENTSCHRIFT

(11) **EP 0 819 139 B1**
(45) Veröffentlichungstag und Bekanntmachung des Hinweises auf die Patenterteilung: **08.12.1999**
(21) Anmeldenummer: 96910009.8
(22) Anmeldetag: 22.03.1996
(51) Int. Cl.: C08F 36/04, C08F 4/52

(54) **GASPHASENPOLYMERISATION VON KONJUGIERTEN DIENEN IN GEGENWART VON ALLYLVERBINDUNGEN DER SELTENEN ERDEN**
GAS-PHASE POLYMERISATION OF CONJUGATED DIENES IN THE PRESENCE OF RARE EARTH ALLYL COMPOUNDS
POLYMERISATION EN PHASE GAZEUSE DE DIENES CONJUGUES EN PRESENCE DE COMPOSES ALLYLE DES TERRES RARES

(30) Priorität: 04.04.1995 DE 19512116
(43) Veröffentlichungstag der Anmeldung: 21.01.1998
(73) Patentinhaber: BAYER AG, 51368 Leverkusen (DE)
(72) Erfinder: TAUBE, Rudolf, D-83534 Freising (DE); MAIWALD, Steffen, D-06217 Merseburg (DE); RÜHMER, Thomas, D-06348 Gro örner (DE); WINDISCH, Heike, D-51429 Bergisch Gladbach (DE); GIESEMANN, Jürgen, D-06112 Halle (DE); SYLVESTER, Gerd, D-51375 Leverkusen (DE)
(86) Internationale Anmeldenummer: EP9601276
(87) Internationale Veröffentlichungsnummer: WO9631544

(56) Entgegenhaltungen:
- EP-A- 0 647 657
- MACROMOLECULAR SYMPOSIA, Bd. 89, 1.Januar 1995, Seiten 393-409, XP000509182 TAUBE R ET AL: "THE CATALYSIS OF THE STEREOSPECIFIC BUTADIENE POLYMERIZATION BY ALLYL NICKEL AND ALLYL LANTHANIDE COMPLEXES A MECHANISTIC COMPARISON"

## Beschreibung

Die Erfindung betrifft einen neuen Katalysator, dessen Herstellung sowie seine Verwendung zur Polymerisation von konjugierten Dienen, insbesondere Butadien, in der Gasphase.

Polybutadien mit einem hohen Anteil an cis-1,4-Einheiten wird seit längerer Zeit in großtechnischem Maßstab produziert und für die Herstellung von Reifen und anderen Gummiwaren verwendet. Die Polymerisation wird dabei in flüssiger Phase unter Verwendung der verschiedensten Katalysatorsysteme durchgeführt. Ein besonders vorteilhaftes Katalysatorsystem zur Herstellung von Polybutadien mit einem hohen Anteil an cis-1,4-Einheiten wird in der Europäischen Patentschrift 11 184 beschrieben. Das dort beschriebene und zur Polymerisation von Butadien in Lösung verwendete Katalysatorsystem besteht aus einem Carboxylat der Seltenen Erden, einem Aluminiumtrialkyl und/oder Alkylaluminiumhydrid und einer weiteren Lewis-Säure.

Die Polymerisation von konjugierten Dienen in Lösung hat den Nachteil, daß bei der Abtrennung des nicht umgesetzten Monomeren und des Lösungsmittels vom gebildeten Polymeren niedermolekularer Verbindungen über Abluft und Abwasser in die Umwelt gelangen können und deshalb entsprechend entsorgt werden müssen.

Es ist auch bekannt (EP 201 979), die Polymerisation von konjugierten Dienen ohne Zusatz von Lösungsmitteln in den flüssigen Monomeren durchzuführen. Ein solches Verfahren hat jedoch den Nachteil, daß bei der vollständigen Polymerisation eine große Wärmemenge frei wird, die schwer zu regulieren ist und deshalb ein gewisses Gefahrenpotential darstellt. Außerdem treten auch hier bei der Abtrennung der Polymeren von den Monomeren Belastungen für die Umwelt auf.

In den letzten Jahren hat sich zur Herstellung insbesondere von Polyethylen und Polypropylen das Gasphasenverfahren als besonders vorteilhaft erwiesen und technisch durchgesetzt. Die umweltrelevanten Vorteile des Gasphasenverfahrens beruhen insbesondere darauf, daß keine Lösungsmittel eingesetzt werden und Emissionen und Abwasserbelastungen verringert werden können.

Bisher ist kein Verfahren bekannt, die Polymerisation von konjugierten Dienen, insbesondere von Polybutadien, direkt aus der Gasphase durchzuführen. Ein Grund mag darin liegen, daß die für die Lösungspolymerisation von konjugierten Dienen verwendeten Ziegler-Natta-Katalysatoren auf Basis von Titan, Kobalt, Nickel oder Neodym nicht ohne weiteres für die Polymerisation in der Gasphase geeignet sind, insbesondere aufgrund der geringen Produktivität, d.h. der geringen Menge an Polymer, die sich mit einer bestimmten Menge Katalysator herstellen läßt. So ist der in EP 11 184 beschriebene Katalysator aufgrund seiner, bei einer Gasphasen-polymerisation nach kurzer Zeit stark abfallenden Aktivität praktisch nicht geeignet, konjugierte Diene, insbesondere Butadien, in der Gasphase zu Polybutadien mit einem hohen Anteil an cis-1,4-Einheiten zu polymerisieren (siehe Vergleichsversuch).

In der deutschen Anmeldung P 43 34 045.8 wurde erstmals ein Katalysatorsystem beschrieben, das die Gasphasen-Polymerisation von konjugierten Dienen, insbesondere Butadien, ermöglicht. Die dort beschriebenen Katalysatoren bestehen aus Verbindungen der Seltenen Erden und einem anorganischen Träger.

Aufgabe der vorliegenden Erfindung war es daher, neue Katalysatoren für die Polymerisation von konjugierten Dienen, insbesondere Butadien, aus der Gasphase zur Verfügung zu stellen, die sich vorteilhaft im Gasphasenverfahren einsetzen lassen.

Es wurde nun überraschend gefunden, daß man die Polymerisation von konjugierten Dienen, insbesondere Butadien zu Polybutadien, mit einem hohen Gehalt an cis-1,4-Doppelbindungen mit Katalysatoren der Seltenen Erden aus der Gasphase durchführen kann, wenn man bestimmte Allyl-Verbindungen der Seltenen Erden in Kombination mit einem Aluminiumalkyl und einem anorganischen Träger einsetzt.

Gegenstand der Erfindung ist somit ein Katalysator bestehend aus:
A) einer Allylverbindung der Seltenen Erden der Formel (I)

   (C₃R₅)ₙMX₃₋ₙ (I),

   worin
   - M: ein dreiwertiges Element der Seltenen Erden mit den Ordnungszahlen 57 bis 71 bedeutet,
   - X: für Cl, Br, J, NR₂, OR, RCO₂, C₅HₘR₅₋ₘ, C₅Hₘ(SiR₃)₅₋ₘ, C₁- bis C₆-Alkyl, (C₆H₅)₃C, RS, N(Si(CH₃)₃)₂ steht mit der nachstehenden Bedeutung für R,
   - R: gleich oder verschieden ist und Wasserstoff oder einen Alkyl-, Aralkyl- oder Arylrest mit 1 bis 10 Kohlenstoffatomen bedeutet,
B) einer Organo-Aluminium-Verbindung, ausgewählt aus der Gruppe der Aluminiumtrialkyle (II), Dialkylaluminiumhydride (III), Dialkylaluminiumhalogenide (IV) oder Alkylaluminiumdichloride (V), und/oder einem Alumoxan der Formeln (VI) bis (VII):
   AlR'₃ (II), HAlR'₂ (III), R'₂AlX (IV), R'AlX₂ (V),
   R'₂Al[OAl(R)]ₙOAlR'₂ (VI), [OAlR']ₙ₋₂ (VII), wobei in den Formeln
   - R': gleich oder verschieden ist und einen Alkylrest mit 1 bis 12 Kohlenstoffatomen bedeutet,
   - X =: Cl, Br, J, OR' ist,
   - n: 1 bis 50 bedeutet und
   - m =: 1 bis 5 ist,
C) einem inerten, teilchenförmigen, anorganischen Feststoff mit einer spezifischen Oberfläche größer als 10 m²/g (BET) und einem Porenvolumen von 0,3 bis 15 ml/g und gegebenenfalls
D) einem konjugierten Dien.

Als Komponente A werden π-Allylkomplexe eines dreiwertigen Elementes der Seltenen Erden mit den im Periodensystem gekennzeichneten Ordnungszahlen 57 bis 71 eingesetzt. Bevorzugt werden solche Verbindungen, in denen M Lanthan, Cer, Praseodym oder Neodym oder ein Gemisch von Elementen der Seltenen Erden, welches mindestens eines der Elemente Lanthan, Cer, Praseodym oder Neodym zu wenigstens 10 Gew.-% enthält, bedeutet. Ganz besonders bevorzugt sind Verbindungen, in denen M Lanthan, Praseodym oder Neodym oder ein Gemisch von Seltenen Erden, welches Lanthan, Praseodym oder Neodym zu mindestens 30 Gew.-% enthält, bedeutet.

Als Komponente A können auch Additionsverbindungen der Formel (I) mit anderen Verbindungen, z.B. Ethern, Aminen oder Li-alkylen eingesetzt werden.

Die Verbindungen der Seltenen Erden können einzeln oder im Gemisch untereinander eingesetzt werden.

Als Komponente A werden z.B. genannt:
La(C₃H₅)₃ · 1,5 dioxan
La(C₃H₅)₃ · 1 dimethylglykolether
La(C₃H₅)₃ · 1 Tetramethylethylendiamin
La(C₃H₅)₃ · 2 Hexamethylphosphorsäuretriamid

C₅H₅La(C₃H₅)₂ · 0,2 dioxan
C₅Me₅La(C₃H₅)₂

La(C₃H₅){N(SiMe₃)₂}₂ · 1,2 THF
La(C₃H₅){Me₃SiN)₂CPh}₂ · 0,6 THF
La(C₃H₅){2,2'-S(6^{-t}Bu-4-Me-C₆H₃O)₂ · 2 THF
La(C₃H₅)₂Cl · 2 THF

Li[La(C₃H₅)₄] · 1,5 dioxan
Li[La(C₃H₄CH₃)₄] · 2 dioxan
Li[La(C₃H₄CH₂C(CH₃)₃)₄] · 2 Dioxan

Li[CₚLa(C₃H₅)₃] · 2 dioxan
Li[C₅Me₅La(C₃H₅)₃] · 2 dioxan
Li[IndenylLa(C₃H₅)₃] · 2 dioxan
Li[FluorenylLa(C₃H₅)₃] · 2 dioxan
Li[C₅Me₅La(all)₃] · 2 THF

Nd(C₃H₅)3 · dioxan

C₅H₅Nd(C₃H₅)₂ · dioxan
C₅Me₅Nd(C₃H₅)₂

Nd(C₃H₅)₂Cl · THF
Nd(C₃H₅)Cl₂ · 1,5 THF

[(2,4-(CH₃)₂C₅H₅)NdCl₂] · 0,33 THF
Li[Nd(C₃H₅)₄] · 1,5 dioxan

Li[CpNd(C₃H₅)₃] · 2 dioxan
Li[C₅Me₅Nd(C₃H₅)₃] · 3 DME

Bevorzugt sind:
Nd(C₃H₅)₃ · dioxan

C₅H₅Nd(C₃H₅)₂ · dioxan
C₅Me₅Nd(C₃H₅)₂

Nd(C₃H₅)₂Cl · THF
Nd(C₃H₅)Cl₂ · 1,5 THF
Li[Nd(C₃H₅)₄] · 1,5 dioxan.

Als Komponente B kommen insbesondere Aluminiumalkyle der Formel (II) in Frage, wie Trimethylaluminium, Triethylaluminium, Tri-n-propylaluminium, Triisopropylaluminium, Tri-n-butylaluminium, Triisobutylaluminium, Tripentylaluminium, Trihexylaluminium, Tricyclohexylaluminium und/oder Trioctylaluminium.

Beispiele für geeignete Aluminiumalkyle der Formel (III) sind:
Diethylaluminiumhydrid, Di-n-butylaluminiumhydrid und/oder Di-iso-butylaluminiumhydrid.

Beispiele für geeignete Aluminiumalkyle der Formel (IV) sind:
Dimethylaluminiumbromid, Dimethylaluminiumchlorid, Diethylaluminiumbromid, Diethylaluminiumchlorid, Dibutylaluminiumbromid und/oder Dibutylaluminiumchlorid.

Beispiele für geeignete Aluminiumalkyle der Formel (IV) sind:
Methylaluminiumdibromid, Methylaluminiumdichlorid, Ethylaluminiumdibromid, Ethylaluminiumdichlorid, Butylaluminiumdibromid und/oder Butylaluminiumdichlorid.

Als Beispiele für Alumoxane der Formeln (VI) und (VII) werden genannt:
Methylalumoxan, Ethylalumoxan und/oder iso-Butylalumoxan, bevorzugt Methylalumoxan und iso-Butylalumoxan.

Als Komponente C werden inerte, teilchenförmige, anorganische Feststoffe mit einer spezifischen Oberfläche größer als 10, bevorzugt 10 bis 1 000 m²/g (BET) und einem Porenvolumen von 0,3 bis 15, bevorzugt von 0,5 bis 12 ml/g eingesetzt.

Die spezifische Oberfläche (BET) wird in üblicher Weise bestimmt nach S. Brunauer, P.H. Emmet und Teller, J. Amer. Chem. Soc. 60 (2), 309 (1938), das Porenvolumen wird bestimmt durch die Zentrifugationsmethode nach M. McDaniel, J. Colloid Interface Sci. 78, 31 (1980).

Als inerte, anorganische Feststoffe eignen sich insbesondere Kieselsäure. Silicagele, Tone, Alumosilikate, Talkum, Zeolithe, Ruß, Graphit, anorganische Oxide, wie Siliciumdioxid, Aluminiumoxid, Magnesiumoxid, Titandioxid, Siliciumcarbid, bevorzugt Silicagele, Aluminiumoxid, Zeolithe und Ruß, besonders bevorzugt Kieselsäure, Silicagel und Aluminiumoxid. Unter inert wird in diesem Fall verstanden, daß die Feststoffe weder eine reaktive Oberfläche aufweisen noch adsorbiertes Material enthalten, die die Bildung eines aktiven Katalysators hindern bzw. mit den Monomeren reagieren.

Die genannten inerten, anorganischen Feststoffe, die der obengenannten Spezifikation genügen und deshalb für den Einsatz geeignet sind, werden beispielsweise näher beschrieben in Ullmanns, Encyclopädie der technischen Chemie, Band 21, S. 439 ff. (Silicagele), Band 23, S. 311 ff. (Tone), Band 14, S. 633 ff. (Ruße), Band 24, S. 575 ff. und Band 17, S. 9 ff. (Zeolithe).

Die anorganischen Feststoffe können einzeln oder im Gemisch untereinander eingesetzt werden.

Das Verhältnis, in denen die Katalysatorkomponenten A bis C eingesetzt werden, kann in weiten Grenzen variiert werden.

Das Molverhältnis der Komponente A zu Komponente B beträgt 1:0,1 bis 1:25 000, bevorzugt 1:0,3 bis 1:2 000, besonders bevorzugt 1:0,5 bis 1:100. Auf 100 g der Komponente C werden 0,01 g bis 10 g der Komponente A, bevorzugt 0,5 bis 5 g der Komponente A eingesetzt.

Es ist auch möglich, den Katalysatorkomponenten A bis C noch eine weitere Komponente D zuzusetzen. Diese Komponente D ist ein konjugiertes Dien, das das gleiche Dien sein kann, das später mit dem Katalysator polymerisiert werden soll. Bevorzugt werden verwendet Butadien und Isopren.

Die Komponente D wird dem Katalysator in Mengen von 0,1 bis 1 000 Mol, bezogen auf 1 Mol der Komponente A zugesetzt, besonders bevorzugt 0,1 bis 100 Mol, bezogen auf 1 Mol der Komponente A. Ganz besonders bevorzugt werden 0,1 bis 50 Mol, bezogen auf 1 Mol der Komponente A, an D eingesetzt.

Ein weiterer Gegenstand der Erfindung ist die Herstellung des zuvor beschriebenen Katalysators. Dieser wird hergestellt, indem man die Komponenten A bis D in einem inerten Lösungs- und/oder Verdünnungsmittel mischt und das Lösungs-bzw. Verdünnungsmittel nach der gewünschten Zeit destillativ, gegebenenfalls im Vakuum, abtrennt. Als inerte Lösungs- und/oder Verdünnungsmittel können aliphatische, cycloaliphatische und/oder aromatische Lösungsmittel, wie Pentan, Hexan, Heptan, Cyclohexan, Benzol und/oder Toluol eingesetzt werden. Die Reihenfolge, in der die Komponenten A bis D und das inerte Lösungsmittel zum Reaktionsansatz gegeben werden, ist beliebig, wenn sie auch einen Einfluß auf die Eigenschaften des resultierenden Katalysators ausüben.

Man kann z.B. die Komponente C in dem inerten Lösungsmittel aufschlämmen, anschließend die Komponente B dazugeben, dann A und schließlich D zugeben. Es ist auch möglich, zwischen den einzelnen Komponenten das inerte Lösungs-bzw. Verdünnungsmittel abzudestillieren, bevor weitere Komponenten, gegebenenfalls in einem inerten Lösungsmittel zugegeben werden. Nach der Zugabe einzelner Komponenten kann der Katalysator auch ein- oder mehrmals mit einem Lösungsmittel behandelt werden, um nicht auf dem Träger gebundene Stoffe zu entfernen.

Die einzelnen Komponenten können auch aufgeteilt werden und die Teile zu verschiedenen Zeiten zum Katalysatoransatz gegeben werden. Eine bevorzugte Ausführungsform besteht beispielsweise darin, die Komponente C mit der Komponente B in einem inerten Lösungs- oder Verdünnungsmittel zu behandeln und anschließend die Komponente A und gegebenenfalls D zuzugeben.

Die Menge des eingesetzten inerten Lösungs- und/oder Verdünnungsmittels kann in weiten Grenzen variiert werden. Aus ökonomischen Gründen wird man die Menge möglichst gering halten. Die minimale Menge richtet sich nach der Menge und der Löslichkeit der einzelnen Komponenten sowie dem Porenvolumen der Komponente C. Bevorzugt wird eine Menge von 10 bis 2 000 Teilen des Lösungs-und/oder Verdünnungsmittels, bezogen auf 100 Teile der Komponente C, eingesetzt.

Die Herstellung des Katalysators kann in einem weiten Temperaturbereich erfolgen. Im allgemeinen liegt die Temperatur zwischen Schmelz- und Siedepunkt der Komponenten A bis B bzw. des inerten Verdünnungs- und/oder Lösungsmittels. Üblicherweise wird bei Temperaturen von -20 bis 80°C gearbeitet.

Die Erfindung betrifft auch ein Verfahren zur Polymerisation von gasförmigen konjugierten Dienen, z.B. von 1,3-Butadien, Isopren, Pentadien oder Dimethylbutadien.

Die Polymerisation erfolgt, indem man das gasförmige konjugierte Dien mit dem beschriebenen Katalysator in Berührung bringt. Dem gasförmigen Monomeren können weitere Gase zugemischt werden, die entweder der Verdünnung oder der Wärmeabführung oder der Regelung des Molekulargewichtes dienen. Die Polymerisation kann bei Drücken von 1 mbar bis 50 bar, bevorzugt 1 bis 20 bar, durchgeführt werden.

Im allgemeinen wird die Polymerisation bei Temperaturen von -20 bis 250°C, bevorzugt bei 0 bis 200°C, besonders bevorzugt bei 20 bis 160°C, durchgeführt.

Die Polymerisation kann in jeder für eine Gasphasenpolymerisation geeigneten Apparatur bewerkstelligt werden. So kann z.B. ein Rührreaktor, ein Drehreaktor oder ein Fließbettreaktor oder eine Kombination dieser Reaktortypen verwendet werden. Um ein Verkleben zu vermeiden, kann der Zusatz von bekannten Pudermitteln hilfreich sein. Als Pudermittel können alle inerten, feinkörnigen Feststoffe verwendet werden, insbesondere auch die als Komponente C beschriebenen inerten, anorganischen Feststoffe.

Die erhaltenen Polymerisate weisen einen Gehalt an cis-1,4-Doppelbindungen von etwa 60 bis 99 % auf. Das Molgewicht kann durch die Zusammensetzung des Katalysators und durch die Variation der Polymerisationsbedingungen verändert werden.

Die Mooneyviskosität, ML (1 + 4', 100°C) (gemessen nach DIN 53 523) liegt üblicherweise im Bereich zwischen 30 und 180 ME. Durch die Polymerisation mit diesen Katalysatoren in der Gasphase können auch sehr hochmolekulare Polymere hergestellt werden, die durch Lösungspolymerisation wegen der hohen Viskosität und der Möglichkeit von Übertragungsreaktionen durch das verwendete Lösungsmittel nur unter extrem hohem Aufwand zugänglich sind.

Die erhaltenen Polymerisate können auf übliche Weise compoundiert und vulkanisiert werden.

In einer gängigen Ausführungsform wird bei der Polymerisation von 1,3-Butadien wie folgt verfahren:

Der aus den Komponenten A bis C und gegebenenfalls D bestehende Katalysator wird in eine Apparatur überführt, die geeignet ist, den pulverförmigen Katalysator in Bewegung zu halten. Das kann z.B. durch Rühren, Drehen und/oder einen Gasstrom erfolgen. Das zunächst im Gasraum befindliche inerte Gas, z.B. Stickstoff, wird durch das gasförmige Monomere ersetzt. Dabei setzt eine sofortige Polymerisation ein und die Temperatur steigt an. Das Monomere wird, gegebenenfalls mit einem Inertgas verdünnt, so schnell dem Reaktor zugeführt, daß die gewünschte Reaktionstemperatur nicht überschritten wird. Die Reaktionstemperatur kann auch auf übliche Weise durch Heizen bzw. Kühlen eingestellt werden. Die Polymerisation wird durch Abstellen der Monomerzufuhr beendet. Das Polymere kann in der bekannten Weise weiterbehandelt werden, indem man den Katalysator desaktiviert und das Polymere mit bekannten Alterungsschutzmitteln behandelt.

Das nachfolgende Beispiel soll die vorliegend beschriebene Erfindung verdeutlichen, ohne dies jedoch auf dieses Beispiel einzuschränken.

### Beispiele

### Beispiel 1

a) Vorbehandlung des Trägers:
   Als Träger wurde ein Silicagel der Firma Grace Davison mit einer Oberfläche nach BET von 600 m²/g eingesetzt. Die mittlere Teilchengröße betrug 45 µm. Vor dem Einsatz war das Silicagel 2 Stunden bei 600°C im Argonstrom getrocknet worden.
b) Herstellung des Katalysators:
   10 g des unter a) beschriebenen Trägers wurden in 50 ml Toluol aufgeschlämmt und mit 80 g einer 10 %igen Lösung von Methylalumoxan (Fa. Witco GmbH) in Toluol 2 Stunden bei -30°C und 48 Stunden bei Raumtemperatur gerührt. Anschließend wurden 1,5 g Tris-π-Allylneodym, (C₃H₅)₃Nd∗ 1,5-Dioxan bei -30°C zugegeben und erneut 48 Stunden bei Raumtemperatur gerührt. Nach dem Abdestillieren des Toluols bei Raumtemperatur im Vakuum wurde ein frei fließendes Pulver isoliert.
c) Polymerisation:
   Die Polymerisation wurde in einem Rotationsverdampfer, der mit einem Magnetrührstab, einem Quecksilber-Überdruckventil und Anschlüssen zu einer Vakuumpumpe und zur Versorgung mit gasförmigem Stickstoff und Butadien sowie einem bis fast auf den Boden des 1 1-Kolbens reichenden Thermofühler ausgerüstet war, durchgeführt. Die Neigung des Rotationsverdampfers wurde so eingestellt, daß die Drehachse mit der des Stabmagneten einen Winkel von 45° bildete. Das gesamte Volumen der Apparatur betrug 1,5 Liter. In den Kolben wurden 3,0 g des oben beschriebenen Katalysators unter Stickstoff eingefüllt. Die Apparatur wurde auf 1 mbar evakuiert und unter Rühren und Drehen mit gasförmigem, trockenem Butadien bis zu einem Druck von 500 mbar gefüllt. Die Temperatur stieg innerhalb einer Minute auf 80°C. Zugleich fiel der Druck. Bei Erreichen von 450 mbar wurde erneut Butadien bis zu einem Druck von 500 mbar zugeführt. Im weiteren Verlauf des Versuches wurde Butadien so zugegeben, daß die Temperatur zwischen 30 und 90°C gehalten wurde.
   Nach 4,5 Stunden wurde die Apparatur evakuiert und anschließend mit N₂ aufgefüllt. Zu diesem Zeitpunkt waren 216 g Butadien verbraucht.
   Das entstandene Produkt wurde aus dem Kolben genommen und 4 Stunden lang mit 2 g Vulkanox BKF (Bayer AG), gelöst in 1 Liter Aceton, zum Abstoppen und Stabilisieren behandelt. Danach wurde das Aceton im Vakuum abdestilliert. Das Gewicht des trockenen Polybutadiens betrug 215 g.
   Die Mooneyviskosität des Polymeren: ML (1 + 4'; 100°C) betrug 147 ME. Gehalt an cis-1,4-Doppelbindungen: 96,5 %.

## Patentansprüche

1. Katalysator, bestehend aus
A) einer Allylverbindung der Seltenen Erden der Formel (I)
(C₃R₅)ₙMX₃₋ₙ (I),
worin
M ein dreiwertiges Element der Seltenen Erden mit den Ordnungszahlen 57 bis 71 bedeutet,
X für Cl, Br, J, NR₂, OR, RCO₂, C₅HₘR₅₋ₘ, C₅Hₘ(SiR₃)₅₋ₘ, C₁- bis C₆-Alkyl, Trityl, C₁₂H₁₂, RS, N(Si(CH₃)₃)₂ steht mit der nachstehenden Bedeutung für R,
R gleich oder verschieden ist und Wasserstoff oder einen Alkyl-, Aralkyl- oder Arylrest mit 1 bis 10 Kohlenstoffatomen bedeutet,
und deren Additionsverbindungen
B) einer Organo-Aluminium-Verbindung, ausgewählt aus der Gruppe der Aluminiumtrialkyle (II), Dialkylaluminiumhydride (III), Dialkylaluminiumhalogenide (IV) oder Alkylaluminiumdichloride (V), und/oder einem Alumoxan der Formeln (VI) bis (VII):
AlR'₃ (II), HAlR'₂ (III), R'₂AlX (IV), R'AlX₂ (V),
R'₂Al[OAl(R')]ₙOAlR'₂ (VI), [OAlR']ₙ₋₂ (VII), wobei in den Formeln
R' gleich oder verschieden ist und einen Alkylrest mit 1 bis 12 Kohlenstoffatomen bedeutet,
X = Cl, Br, J, OR' ist,
n für die Organo-Aluminium-Verbindung 1 bis 50 bedeutet,
n für die Allylverbindung der Seltenen Erden der Formel (I) eine ganze Zahl von 1 bis 3 bedeutet und
m = 1 bis 5 ist,
C) einem inerten, teilchenförmigen, anorganischen Feststoff mit einer spezifischen Oberfläche größer als 10 m²/g (BET) und einem Porenvolumen von 0,3 bis 15 ml/g und gegebenenfalls
D) einem konjugierten Dien.

2. Katalysator gemäß Anspruch 1, dadurch gekennzeichnet, daß das Molverhältnis der Komponente A zu Komponente B 1:0,1 bis 1:25 000 beträgt.

3. Katalysator gemäß Ansprüchen 1 bis 2, dadurch gekennzeichnet, daß die Komponente D in Mengen von 0,1 bis 1000 Mol, bezogen auf 1 Mol der Komponente A, eingesetzt wird.

4. Katalysator gemäß Ansprüchen 1 bis 3, dadurch gekennzeichnet, daß die Komponente A in Mengen von 0,01 g bis 10 g, bezogen auf 100 g der Komponente C, eingesetzt wird.

5. Verfahren zur Herstellung eines Katalysators gemäß Ansprüchen 1 bis 4 dadurch gekennzeichnet, daß man die Komponenten A bis D des in Anspruch 1 beschriebenen Katalysators in einem inerten, organischen Lösungs- und/oder Verdünnungsmittel bei Temperaturen von -20 bis 80°C in beliebiger Reihenfolge mischt, und anschließend das eingesetzte Lösungs- und/oder Verdünnungsmittel in geeigneter Weise abtrennt.

6. Verfahren zur Polymerisation von konjugierten Dienen in der Gasphase, dadurch gekennzeichnet, daß man einen Katalysator gemäß Anspruch 1 zur Polymerisation einsetzt.

## Revendications

1. Catalyseur consistant en
A) un dérivé allylique des terres rares de formule (I)
(C₃R₅ )ₙMX₃₋ₙ (I),
dans laquelle
M représente un élément trivalent des terres rares de numéro atomique 57 à 71,
X représente Cl, Br, I, NR₂, OR, RCO₂, C₅HₘR₅₋ₘ, C₅Hₘ(SiR₃)₅₋ₘ, un groupe alkyle en C₁-C₆, un groupe trityle, C₁₂H₁₂, RS, N(Si(CH₃)₃)₂
les symboles R, ayant des significations identiques ou différentes, représentent chacun l'hydrogène ou un groupe alkyle, aralkyle ou aryle en C₁-C₁₀,
et leurs composés d'addition,
B) un dérivé d'organo-aluminium choisi dans le groupe des trialkyl-aluminiums (II), des hydrures de dialkyl-aluminium (III), des halogénures de dialkyl-aluminium (IV) ou des dichlorures d'alkyl-aluminium (V) et/ou un alumoxane de formule (VI) à (VII) :
AlR'₃ (II), HAlR'₂ (III), R'₂AlX (IV), R'AlX₂ (V),
R'₂Al[OAl(R')]ₙOAlR'₂ (VI), [OAlR']ₙ₋₂ (VII), dans lesquelles
les symboles R', ayant des significations identiques ou différentes, représentent chacun un groupe alkyle en C₁-C₁₂,
X = Cl, Br, I, OR',
n est un nombre allant de 1 à 50 pour le dérivé d'organo-aluminium,
n est un nombre entier allant de 1 à 3 pour le dérivé allylique des terres rares de formule (I) et
m = 1 à 5,
C) une matière solide minérale inerte en particules a une surface spécifique BET supérieure à 10 m²/g et un volume de pores de 0,3 à 15 ml/g, et le cas échéant
D) un diène conjugué.

2. Catalyseur selon la revendication 1, caractérisé en ce que le rapport molaire du composant A au composant B va de 1:0,1 à 1:25 000.

3. Catalyseur selon les revendications 1 à 2, caractérisé en ce que le composant D est mis en oeuvre en quantité de 0,1 à 1000 mol pour 1 mol du composant A.

4. Catalyseur selon les revendications 1 à 3, caractérisé en ce que le composant A est mis en oeuvre en quantité de 0,01 à 10 g pour 100g du composant C.

5. Procédé de préparation d'un catalyseur selon les revendications 1 à 4, caractérisé en ce que l'on mélange dans un ordre quelconque, à des températures de - 20 à 80°C, les composants A à D du catalyseur décrit dans la revendication 1 dans un solvant et/ou diluant organique inerte puis on sépare de manière appropriée le solvant et/ou diluant utilisé.

6. Procédé pour la polymérisation de diènes conjugués en phase gazeuse, caractérisé en ce que l'on utilise pour la polymérisation un catalyseur selon la revendication 1.

## Claims

1. Catalyst consisting of
A) a rare earth allyl compound of the formula (I)
(C₃R₅)ₙMX₃₋ₙ (I),
in which
M means a trivalent rare earth element with an atomic number of 57 to 71,
X denotes Cl, Br, I, NR₂, OR, RCO₂, C₅HₘR₅₋ₘ, C₅Hₘ(SiR₃)_{5-m,} C₁ to C₆ alkyl, trityl, C₁₂H₁₂, RS, N(Si(CH₃)₃)₂ with R having the following meaning,
R is identical or different and means hydrogen or an alkyl, aralkyl or aryl residue with 1 to 10 carbon atoms,
and the addition compounds thereof
B) an organoaluminium compound selected from the group comprising aluminiumtrialkyls (II), dialkylaluminium hydrides (III), dialkylaluminium halides (IV) or alkylaluminium dichlorides (V) and/or an alumoxane of the formulae (VI) to (VII):
AlR'₃ (II), HAIR'₂ (III), R'₂AlX (IV), R'AlX₂ (V),
R'₂Al [OAl(R')]ₙOAlR'₂ (VI), [OAlR']ₙ₋₂ (VII) , wherein, in the formulae,
R' is identical or different and means an alkyl residue with 1 to 12 carbon atoms,
X is Cl, Br, I, OR',
n means 1 to 50 for the organoaluminium compound,
n means an integer from 1 to 3 for the rare earth allyl compound of the formula (I) and
m is 1 to 5,
C) an inert, particulate, inorganic solid with a specific surface area of greater than 10 m²/g (BET) and a pore volume of 0.3 to 15 ml/g and optionally
D) a conjugated diene.

2. Catalyst according to claim 1, characterised in that the molar ratio of component A to component B is 1:0.1 to 1:25000.

3. Catalyst according to claims 1 to 2, characterised in that component D is used in quantities of 0.1 to 1000 mol relative to 1 mol of component A.

4. Catalyst according to claims 1 to 3, characterised in that component A is used in quantities of 0.01 g to 10 g relative to 100 g of component C.

5. Process for the production of a catalyst according to claims 1 to 4, characterised in that components A to D of the catalyst described in claim 1 are mixed in any desired sequence in an inert, organic solvent and/or diluent at temperatures of -20 to 80°C and the solvent and/or diluent used is then separated in a suitable manner.

6. Process for the polymerisation of conjugated dienes in the gas phase, characterised in that a catalyst according to claim 1 is used for polymerisation.
